# EUROPEAN PATENT SPECIFICATION

(11) **EP 3 473 083 B1**
(45) Date of publication and mention of the grant of the patent: **02.11.2022**
(21) Application number: 18187559.2
(22) Date of filing: 06.08.2018
(51) Int. Cl.: A01G 23/00, A01G 23/099, C09D 5/08, C09D 7/40

(54) **METHOD FOR MARKING A TREE TRUNCK WITH BIODEGRADABLE AQUEOUS MARKING PAINT SOLUTION AND BIODEGRADABLE AQUEOUS MARKING PAINT SOLUTION**
VERFAHREN ZUR MARKIERUNG EINES BAUMSTAMMS MIT BIOLOGISCH ABBAUBARER WÄSSRIGER MARKIERUNGSFARBENLÖSUNG SOWIE BIOLOGISCH ABBAUBARE WÄSSRIGE MARKIERUNGSFARBENLÖSUNG
PROCÉDÉ DE MARQUAGE D'UN TRONC D'ARBRE AVEC UNE SOLUTION AQUEUSE BIODÉGRADABLE DE PEINTURE DE MARQUAGE ET SOLUTION AQUEUSE BIODÉGRADABLE DE PEINTURE DE MARQUAGE

(30) Priority: 04.08.2017 FI 20175711
(43) Date of publication of application: 24.04.2019
(73) Proprietor: ReCLog Oy, 35700 Vilppula (FI)
(72) Inventor: MAJAMÄKI, Pekka, 35700 Vilppula (FI)
(74) Representative: Berggren Oy

(56) References cited:
- WO-A1-03/034809
- DE-A1-102006 011 677
- US-A- 5 735 940

## Description

The invention is a method according to claim 1 for marking a tree trunk with a biodegradable aqueous marking paint solution containing a rust inhibitor as well.

The invention also is a biodegradable aqueous marking paint solution according to claim 10 for marking a tree trunk, said aqueous solution containing also a rust inhibitor.

Tree trunks are marked with water soluble marking paints by means of a harvester head-mounted spraying device in the process of tree felling for sorting the tree trunks. The marking paints used in aqueous marking paint solutions have good resistance to low temperatures but, in order to prevent water from freezing in the spraying apparatus, the aqueous solution should contain some appropriate antifreezing agent for raising the aqueous solution freezing point. WO 03/034809 A1 discloses an aqueous marking paint solution and a method for marking a tree trunk with said aqueous marking paint solution.

Since tree trunks are marked with an automated spraying device in connection with tree felling, said aqueous solutions should contain some appropriate corrosion inhibitor for protecting the marking paint spraying equipment from rusting.

These corrosion inhibitors and anti-freezes employed in aqueous marking paint solutions should also be compatible with the marking paint, i.e. none of the composition's components should be allowed to settle, form sediment or otherwise separate from the rest of the aqueous solution during storage.

It is because an automated implementation of the marking method that some marking paint often ends up also in the vicinity of a stump, which may cause unnecessary environmental burden should the aqueous marking paint solution contain non-biodegradable or ecologically toxic ingredients.

Another major problem with marking paints results from the application rates and usage thereof: aqueous marking paint solutions must necessarily be charged into a spraying device and used in relatively large amounts with an ever-present hazard of some ending up on a user's skin.

It was an objective of the invention to eliminate and/or alleviate problems appearing in the foregoing prior art.

Accordingly, it was an objective of the invention to provide a completely biodegradable aqueous marking paint solution, wherein the aqueous marking paint solution's components would be biodegradable.

Moreover, at least the aqueous marking paint solution's main components should cause as little skin irritation as possible and should be as nontoxic as possible both inhaled and by way of dermal exposure. The latter implies that the LD50 values thereof should be high for mammals, especially humans.

In addition, other components used in an aqueous marking paint solution should be compatible with the actual marking paint, yet, at the same time, the aqueous marking paint solution should spread on a tree as rapidly as possible because the marking is performed in an automated manner as the tree is felled.

For example, in widely used ethylene glycol-based water soluble marking paints, the human lethal toxicity of ethylene glycol has been estimated to be as low as about 1,4 ml/kg, whereby about 50 ml of ethylene glycol orally ingested may cause death. Furthermore, in commercially available ethylene glycol-based water soluble marking paints, the aqueous solution's components are incompatible with several biodegradable rust inhibitors, limiting considerably the use thereof.

The foregoing objectives are attained with a method of claim 1 for marking tree trunks and with a biodegradable aqueous marking paint solution of claim 10.

More specifically, the invention relates to a method for marking a tree trunk with a biodegradable aqueous marking paint solution, which also contains a rust inhibitor. The method comprises spraying a trunk with an aqueous marking paint solution, which contains 35-55 wt% water and 40-60 wt% glycerol whose biodegradability as per test method OECD 301 is not more than 30 days, 0,1-2 wt% a colorant, 0,1-2 wt% a corrosion inhibitor, the total amount of glycerol and water in said aqueous solution being nevertheless higher than 95%, preferably higher than 97 wt%.

The invention relates also to a biodegradable aqueous marking paint solution for marking a tree trunk, said aqueous solution also containing a corrosion inhibitor. The aqueous marking paint solution consists of 40-60 wt% glycerol, 35-55 wt% water, 0,1-2 wt% a colorant, 0,1-2 wt% a corrosion inhibitor, and 0-3 wt% an additive such as a foam suppressant, the total amount of glycerol and water in said aqueous solution being nevertheless higher than 95%, preferably higher than 97 wt%.

The method according to the invention is carried out by using an aqueous marking paint solution whose main components are completely biodegradable, nontoxic, and not causing skin irritation. More specifically, the invention is based on the aqueous solution's main components water and glycerol being non skin irritating, nontoxic, and completely biodegradable.

The skin irritancy of glycerol, measured on the Draize scale, is as low as 0-0.4 while the maximum is 30. Preferably, the aqueous solution contains water and glycerol in a ratio 1:1 (wt%/wt%) and, in addition, the combined amount of water and glycerol of the aqueous solution's total weight is not less than 95 wt%. Thereby is achieved the significant benefit that the solution predominantly contains non skin irritating, nontoxic components water and glycerol, which break down rapidly after ending up in nature. Glycerol is not toxic to humans even in 100-fold doses in comparison with glycol and has been approved as a food additive.

In a preferred embodiment of the invention, the corrosion inhibitor is also predominantly biodegradable. It is preferred that 95 wt%, preferably more than 99 wt%, of the corrosion inhibitor be biodegradable in less than 10 days, preferably in less than 4 days, when tested with OECD 301 method.

In a preferred embodiment of the invention, the marking paint itself is also biodegradable.

In a preferred embodiment of the invention, the biodegradable corrosion inhibitor contains water, sodium salts of organic acids, sodium benzoate, and sodium nitrite.

In another preferred embodiment of the invention, the biodegradable corrosion inhibitor is an anionic corrosion inhibitor which contains disodium(tetrapropenyl)succinate.

In yet another preferred embodiment of the invention, the biodegradable corrosion inhibitor contains polyhydroxyamides as an active rust inhibitor.

The employed method for establishing biodegradability for an aqueous solution of the present disclosure and its components was test method OECD 301, encompassing, among others, test methods OECD 301A and OECD 301D

The invention will now be illustrated in even more detail with accompanying examples. The aqueous solutions prepared in examples 1-3 were all clear with no turbidities. All aqueous solutions were tested by spraying or applying the same on a felled tree trunk manually or by means of an automated spraying implement mounted on a harvester head grapple and coupled with a disc saw. Hence, the grapple-mounted disc saw could be used first for cutting a tree and, subsequently or simultaneously, the tree trunk could be sprayed with a marking paint. The harvester head grapple-mounted spraying implement was provided with a spraying device functionally connected to the harvester head grapple's hydraulics. The spraying device comprised spray nozzles, a container holding an aqueous solution, and pumping equipment for pumping the aqueous solution to the spraying device's nozzles.

### Example 1

A stump marking paint was produced by preparing in a clean vessel an aqueous solution containing components set forth in table 1. This was followed by applying the marking paint on the trunk of a felled tree.

**Table 1**

| Stump marking paint, aqueous solution 1 | | | | |
|---|---|---|---|---|
| **Ingredient** | **amount/kg** | **wt%** | **amount/l** | **vol%** |
| Water | 50 | 43,98 | 50,6 | 49,7 |
| Glycerol | 62,07 | 54,60 | 49,2 | 48,9 |
| Ecozol Red LY | 0,800 | 0,7 | 0,7 | 0,69 |
| Rima Flash B5 | 0,500 | 0,4 | 0,4 | 0,39 |
| **Total** | 113,67 | 100 | 100,50 | 100 |

**Prepared similarly to aqueous solution 1 were also other aqueous marking paint solutions with proportions of the foregoing components varied as follows:**
Water 35-50 wt% and 35-50 vol%
Glycerol 40-55 wt% and 35-50 vol%
Rima flash B5 (corrosion inhibitor) 0,1-2 wt%, preferably 0,1-1 wt%.
Colorant Ecozol Red LY 0,1-2 wt%, preferably 0,1-1 wt%.

However, the total amount of water and glycerol in the aqueous solution was always more than 95%, preferably more than 98 wt%, of the aqueous solution's total weight.

Preferably, the aqueous marking paint solution contained glycerol and water in a ratio of 1:1 (vol/vol).

Colorants used in test 1:
Puricolor Rot ARE18
Puricolor Red Pre 5-1 New
Ecozol Red LY
Ecozol Blue N (LiOH, monohydrate)
Iragon Blau ABL 9 HFC

Rima flash B5^{®} is a corrosion inhibitor containing sodium nitrite as an active substance.

All aqueous solutions tested in example 1 were clear with no turbidities.

The aqueous solutions of example 1 also allow the use of adjuvants such as foam suppressants 0,2-1 wt%. Even then, the total amount of water and glycerol of the entire aqueous solution's weight is still more than 95%, preferably more than 97 wt%.

### Example 2

Aqueous marking paint solutions were prepared, containing:
Water 35-50 wt%
Glycerol 40-55 wt%
Rewocoros B3010^{®} (corrosion inhibitor) 0,1-2 wt%
Colorant 0,1-2 wt%

Colorants were used at 1,5 wt% of the aqueous solution's 2 total weight. Preferably, the aqueous solution 2 contained glycerol and water in a ratio of 1:1 (vol/vol).

Colorants used in test 2:
Puricolor Rot ARE18
Puricolor Ter Pre 5-1 New
Ecozol Red LY
Ecozol Blue N (LiOH, monohydrate)
Iragon Blau ABL 9 HFC

Rewocoros B3010 is an anionic surfactant that contains disodium(tetrapropenyl)succinate as an active substance and has anti-corrosion properties.

All aqueous solutions tested in example 2 were clear with no turbidities.

The aqueous solutions of example 2 also allow the use of adjuvants such as foam suppressants 0,2-1 wt%.

### Example 3

The following aqueous marking paint solution was prepared
Water 35-50 wt%
Glycerol 40-55 wt%
Anticor A 40 ^{®} (corrosion inhibitor) 0,1-2 wt%
Colorant 0,1-2 wt%

Colorants were used preferably at 0,7 wt% of the aqueous solution's total weight. Preferably, the aqueous solution contained glycerol and water in a ratio of 1:1.

The aqueous solution of example 3 also allows the use of adjuvants such as foam suppressants 0,2-1 wt%. A typical foam suppressant is Defoamer 700, which is based on a stabilized copolymer.

Defoamer 700 in all examples 1-3 is a foam suppressant based on a stabilized copolymer. It can be used in aqueous solutions of the invention in the amount of 0,2-1 wt%.

Other colorants used in example 3:
Metric Blue B
Metric Blue, which contains acetic acid 10-30% and diethylene glycol 1-5%
Metric Red
Metric Red, which contains acetic acid 10-30% and diethylene glycol 1-5%
Puricolor Rot ARE18
Puricolor Ter Pre 5-1 New
Ecozol Red LY
Ecozol Blue N (LiOH, monohydrate)
Iragon Blau ABL 9 HFC

Anticor A 40 is a corrosion inhibitor, which contains polyhydroxyamides.

All aqueous solutions tested in example 3 were clear with no turbidities.

### Example 4

The toxicity and biodegradability of certain active substances used in examples 1-3 for aqueous marking paint solutions

### Example 4A: Glycerol and glycol

**Glycerol** (source SIDS Initial Assessment Report for SIAM 14, Paris 2002) physical properties:
Gas pressure at 25°C 0,000106 kPa.
Solubility in water 100,000 mg/l (completely water-soluble).
**Toxicological properties of glycerol**
Log Kow= - 1.76.

LD50 (oral and dermal) is higher than 4000 mg/kg, generally in the range of 23,000-38,000 mg/kg. LD50 varies for mammals within the range of 4000-60,000 mg/kg, depending on test method and mammal. There are hardly any tests for human subjects, one uncorroborated estimate for the level of lethal dosage being 1428 mg/kg.

LC50 for fish is more than 5000 mg/l and for marine mammals 10,000 mg/l.

In a so-called "closed bottle" test, conducted as per standard OECD 301, the aerobic biodegradability was less than 30 days. The biodegradability of more than 60% as a ThOD value determined after 10 days.

BOD5 was 82% of ThOD and 86% of COD. BOD5/COD = 0.86.

Skin irritation on Draize scale 0-0.4 (the maximum is 30).

Glycerol has also been approved as a food additive, being quite safe when ingested.

**Comparative example: Comparison of glycerol toxicity with ethylene glycol C₂H₆O₂:**
Ethylene glycol: LD50 (rat oral 584 mg/kg), but for human the lethal toxicity has been estimated to be as low as 1,4 ml/kg, whereby about 50 ml of ethylene glycol orally ingested may result in death. This is considerably lower than in the case of glycerol.
LD50 (dermal, rabbit) about 9500 mg/kg
LC50, fish 18500 mg/l
Ethylene glycol has been classified as hazardous to health.

### Example 4B) Colorants

### 1) Iragon Blue ABL9 HFC (Basf)

CAS # 3844-45-9; EC# 223-339-8, a purple dye which is based on disodium salt of triphenylmethane
LC50 (Fish, 90 h) 220-460 mg/l
EC50 (marine invertebrates, 48h)

Effect on the performance of activated sludge: EC10> 10.000 mg/l (standard 38412 Part 27)

On the basis of this, the Iragon blue dye is not acutely toxic for aquatic organisms. Biodegradability COD 1640 mg/g (non-biodegradable).

### 2) Ezocol colors

Ecozol Yellow MR, Ecozol Red LY, Ecozol Blue NC, Ecozol MYCR fulfill the biodegradability requirements as well as the eco-toxicity requirements, when the colors are added in the amount of less than 1 wt% into the above-determined aqueous marking paint solution.

### 4C) Corrosion inhibitors

### 1) Rima flash B5^{®}

Rima Flash is a liquid corrosion inhibitor, which contains predominantly water, sodium salts of organic acids, sodium benzoate and sodium nitrite.

| | |
|---|---|
| pH | 8,1-8,7 |
| Boiling range/boiling point | 100°C |
| Density | 1,12-1,16 g/cm3 at 20°C |
| Dynamic viscosity: 70 mPa | at 20°C |

Of these, the sodium salts of organic acids and sodium benzoate break down in less than 4 days when tested as per standard OECD 301D. Standard OECD 301D does not lend itself to sodium nitrite which is present merely 1-5 wt% of the composition's weight. The conclusion 95-99% Rima flash rust inhibitor is very rapidly biodegradable.

Other properties: LD50 (rat) >2000 mg/kg.

### 2) Anticor 40, rust inhibitor solution based on polyhydroxyamines

| | |
|---|---|
| Density (at 20°C) | 1.30-1.35 g/cm³ |
| Flash point | higher than 65°C |
| pH | 2-4 |

### Completely soluble in water

### Non-foaming

Biodegradability: In a so-called "closed bottle" test, conducted as per standard OECD 301, the aerobic biodegradability of anticor 40 is less than 30 days.

## Claims

1. A method for marking a tree trunk with a biodegradable aqueous marking paint solution, which also contains a rust inhibitor, **characterized in that** on the tree trunk is sprayed or applied an aqueous marking paint solution, which contains 35-55 wt% water and 40-60 wt% glycerol whose biodegradability as per test method OECD 301 is not more than 30 days, 0,1-2 wt% a colorant, 0,1-2 wt% a corrosion inhibitor, the total amount of glycerol and water in said aqueous solution being nevertheless higher than 95%, preferably higher than 97 wt%.

2. The method according to claim 1, **characterized in that** the marking of a tree trunk with an aqueous marking paint solution is performed by spraying the tree trunk with the aqueous solution by means of an automated spraying apparatus which is coupled to the harvester head grapple of a forest machine.

3. The method according to claim 1, **characterized in that** the aqueous marking paint solution contains glycerol and water in a ratio of 1:1 (vol%/vol%).

4. The method according to claim 1, **characterized in that** the aqueous marking paint solution contains an anionic, cationic or nonionic corrosion inhibitor 0,1-2,0 wt%, preferably 0,1-1 wt%.

5. The method according to claim 4, **characterized in that** a predominant portion of the corrosion inhibitor is also biodegradable.

6. The method according to claim 4 or 5, **characterized in that** 95 wt%, preferably more than 99 wt%, of the corrosion inhibitor is biodegradable in less than 10 days, preferably in less than 4 days, as tested with method OECD 301.

7. The method according to claim 5, **characterized in that** the corrosion inhibitor contains water, sodium salts of organic acids, sodium benzoate and sodium nitrite.

8. The method according to claim 5, **characterized in that** the corrosion inhibitor is an anionic corrosion inhibitor, which contains disodium(tetrapropenyl)succinate.

9. The method according to claim 5, **characterized in that** the corrosion inhibitor contains polyhydroxyamides as an active anti-rust agent.

10. A biodegradable aqueous marking paint solution for marking a tree trunk, said aqueous solution also containing a corrosion inhibitor, **characterized in that** the aqueous marking paint solution consists of 40-60 wt% glycerol, 35-55 wt% water, 0,1-2 wt% a colorant, 0,1-2 wt% a corrosion inhibitor, and 0-3 wt% an additive such as a foam suppressant, the total amount of glycerol and water in said aqueous solution being nevertheless higher than 95%, preferably higher than 97 wt%.

11. The biodegradable aqueous marking paint according to claim 10, **characterized in that** the aqueous marking paint solution contains a corrosion inhibitor in the amount of 0,1-1 wt% of the aqueous solution's total weight.

12. The biodegradable aqueous marking paint solution according to claim 11, **characterized in that** the corrosion inhibitor contains sodium nitrite.

13. The biodegradable aqueous marking paint solution according to claim 11, **characterized in that** the corrosion inhibitor contains polyhydroxyamides.

14. The biodegradable aqueous marking paint solution according to claim 11, **characterized in that** the corrosion inhibitor contains alkenyl succinate such as sodium(tetrapropenyl)succinate.

15. The biodegradable aqueous marking paint solution according to claim 10, **characterized in that** the marking paint contains acetic acid.

## Patentansprüche

1. Verfahren zum Markieren eines Baumstammes mit einer biologisch-abbaubaren wässrigen Markierfarbenlösung, die auch einen Rostinhibitor enthält, **dadurch gekennzeichnet, dass** auf den Baumstamm eine wässrige Markierfarbenlösung aufgesprüht oder aufgetragen wird, die 35-55 Gew.-% Wasser und 40-60 Gew.-% Glycerin, dessen biologische Abbaubarkeit gemäß dem Testverfahren OECD 301 nicht mehr als 30 Tage beträgt, 0,1-2 Gew.-% eines Farbstoffs, 0,1-2 Gew.-% eines Korrosionsinhibitors enthält, wobei die Gesamtmenge an Glycerin und Wasser in der wässrigen Lösung dennoch höher als 95 % ist, vorzugsweise höher als 97 Gew.-%.

2. Verfahren nach Anspruch 1, **dadurch gekennzeichnet, dass** die Markierung eines Baumstammes mit einer wässrigen Markierfarbenlösung durch Besprühen des Baumstammes mit der wässrigen Lösung mittels einer automatischen Sprühvorrichtung durchgeführt wird, die an den Harvesterkopfgreifer einer Forstmaschine gekoppelt ist.

3. Verfahren nach Anspruch 1, **dadurch gekennzeichnet, dass** die wässrige Markierfarbenlösung Glycerin und Wasser in einem Verhältnis von 1:1 (Vol%/Vol%) enthält.

4. Verfahren nach Anspruch 1, **dadurch gekennzeichnet, dass** die wässrige Markierfarbenlösung einen anionischen, kationischen oder nichtionischen Korrosionsinhibitor in einer Konzentration von 0,1-2,0 Gew.-%, vorzugsweise 0,1-1 Gew.-%, enthält.

5. Verfahren nach Anspruch 4, **dadurch gekennzeichnet, dass** ein überwiegender Teil des Korrosionsinhibitors ebenfalls biologisch-abbaubar ist.

6. Verfahren nach Anspruch 4 oder 5, **dadurch gekennzeichnet, dass** 95 Gew.-%, vorzugsweise mehr als 99 Gew.-%, des Korrosionsinhibitors in weniger als 10 Tagen, vorzugsweise in weniger als 4 Tagen, biologisch-abbaubar sind, wie mit dem Verfahren OECD 301 getestet.

7. Verfahren nach Anspruch 5, **dadurch gekennzeichnet, dass** der Korrosionsinhibitor Wasser, Natriumsalze von organischen Säuren, Natriumbenzoat und Natriumnitrit enthält.

8. Verfahren nach Anspruch 5, **dadurch gekennzeichnet, dass** der Korrosionsinhibitor ein anionischer Korrosionsinhibitor ist, der Dinatrium(tetrapropenyl)succinat enthält.

9. Verfahren nach Anspruch 5, **dadurch gekennzeichnet, dass** der Korrosionsinhibitor Polyhydroxyamide als aktives Rostschutzmittel enthält.

10. Biologisch-abbaubare wässrige Markierfarbenlösung zum Markieren eines Baumstamms, wobei die wässrige Lösung auch einen Korrosionsinhibitor enthält, **dadurch gekennzeichnet, dass** die wässrige Markierfarbenlösung aus 40-60 Gew.-% Glycerin, 35-55 Gew.-% Wasser, 0,1-2 Gew.-% eines Farbstoffes, 0,1-2 Gew.-% eines Korrosionsinhibitors und 0-3 Gew.-% eines Additivs, wie z.B. eines Schaumunterdrückungsmittels, besteht, wobei die Gesamtmenge an Glycerin und Wasser in der wässrigen Lösung dennoch höher als 95 %, vorzugsweise höher als 97 Gew.-% ist.

11. Biologisch-abbaubare wässrige Markierfarbenlösung nach Anspruch 10, **dadurch gekennzeichnet, dass** die wässrige Markierfarbenlösung einen Korrosionsinhibitor in einer Menge von 0,1-1 Gew.-% des Gesamtgewichts der wässrigen Lösung enthält.

12. Biologisch-abbaubare wässrige Markierfarbenlösung nach Anspruch 11, **dadurch gekennzeichnet, dass** der Korrosionsinhibitor Natriumnitrit enthält.

13. Biologisch-abbaubare wässrige Markierfarbenlösung nach Anspruch 11, **dadurch gekennzeichnet, dass** der Korrosionsinhibitor Polyhydroxyamide enthält.

14. Biologisch-abbaubare wässrige Markierfarbenlösung nach Anspruch 11, **dadurch gekennzeichnet, dass** der Korrosionsinhibitor Alkenylsuccinat wie z.B. Natrium(tetrapropenyl)succinat enthält.

15. Biologisch-abbaubare wässrige Markierfarbenlösung nach Anspruch 10, **dadurch gekennzeichnet, dass** die Markierfarbe Essigsäure enthält.

## Revendications

1. Procédé de marquage d'un tronc d'arbre avec une solution aqueuse de peinture de marquage biodégradable, qui contient également un inhibiteur de rouille, **caractérisé en ce que** sur le tronc d'arbre est pulvérisée ou appliquée une solution aqueuse de peinture de marquage, qui contient 35 à 55 % en poids d'eau et 40 à 60 % en poids de glycérol dont la biodégradabilité selon la méthode d'essai OCDE 301 n'est pas supérieure à 30 jours, 0,1 à 2% en poids d'un colorant, 0,1 à 2 % en poids d'un inhibiteur de corrosion, la quantité totale de glycérol et d'eau dans ladite solution aqueuse étant néanmoins supérieure à 95 %, de préférence supérieure à 97 % en poids.

2. Procédé selon la revendication 1, **caractérisé en ce que** le marquage d'un tronc d'arbre avec une solution aqueuse de peinture de marquage est effectué en pulvérisant le tronc d'arbre avec la solution aqueuse au moyen d'un appareil de pulvérisation automatisé qui est couplé au grappin de tête d'abattage d'une machine forestière.

3. Procédé selon la revendication 1, **caractérisé en ce que** la solution aqueuse de peinture de marquage contient du glycérol et de l'eau dans un rapport de 1:1 (% en volume/% en volume).

4. Procédé selon la revendication 1, **caractérisé en ce que** la solution aqueuse de peinture de marquage contient un inhibiteur de corrosion anionique, cationique ou non ionique à raison de 0,1 à 2,0 % en poids, de préférence de 0,1 à 1 % en poids.

5. Procédé selon la revendication 4, **caractérisé en ce qu'**une partie prédominante de l'inhibiteur de corrosion est également biodégradable.

6. Procédé selon la revendication 4 ou 5, **caractérisé en ce que** 95 % en poids, de préférence plus de 99 % en poids, de l'inhibiteur de corrosion sont biodégradables en moins de 10 jours, de préférence en moins de 4 jours, comme testé avec la méthode OCDE 301.

7. Procédé selon la revendication 5, **caractérisé en ce que** l'inhibiteur de corrosion contient de l'eau, des sels de sodium d'acides organiques, du benzoate de sodium et du nitrite de sodium.

8. Procédé selon la revendication 5, **caractérisé en ce que** l'inhibiteur de corrosion est un inhibiteur de corrosion anionique, qui contient du (tétrapropényl)succinate disodique.

9. Procédé selon la revendication 5, **caractérisé en ce que** l'inhibiteur de corrosion contient des polyhydroxyamides en tant qu'agent antirouille actif.

10. Solution aqueuse de peinture de marquage biodégradable pour marquer un tronc d'arbre, ladite solution aqueuse contenant également un inhibiteur de corrosion, **caractérisée en ce que** la solution aqueuse de peinture de marquage est constituée de 40 à 60 % en poids de glycérol, 35 à 55 % en poids d'eau, 0,1 à 2 % en poids d'un colorant, 0,1 à 2 % en poids d'un inhibiteur de corrosion et 0 à 3 % en poids d'un additif tel qu'un antimousse,
la quantité totale de glycérol et d'eau dans ladite solution aqueuse étant néanmoins supérieure à 95 %, de préférence supérieure à 97 % en poids.

11. Peinture de marquage aqueuse biodégradable selon la revendication 10, **caractérisée en ce que** la solution aqueuse de peinture de marquage contient un inhibiteur de corrosion en une quantité de 0,1 à 1 % en poids du poids total de la solution aqueuse.

12. Solution aqueuse de peinture de marquage biodégradable selon la revendication 11, **caractérisée en ce que** l'inhibiteur de corrosion contient du nitrite de sodium.

13. Solution aqueuse de peinture de marquage biodégradable selon la revendication 11, **caractérisée en ce que** l'inhibiteur de corrosion contient des polyhydroxyamides.

14. Solution aqueuse de peinture de marquage biodégradable selon la revendication 11, **caractérisée en ce que** l'inhibiteur de corrosion contient un succinate d'alcényle tel que le (tétrapropényl)succinate de sodium.

15. Solution aqueuse de peinture de marquage biodégradable selon la revendication 10, **caractérisée en ce que** la peinture de marquage contient de l'acide acétique.
